# FASCICULE DE BREVET EUROPEEN

(11) **EP 1 989 062 B1**
(45) Date de publication et mention de la délivrance du brevet: **27.10.2010**
(21) Numéro de dépôt: 07726445.5
(22) Date de dépôt: 20.02.2007
(51) Int. Cl.: B60C 9/20

(54) **PNEUMATIQUE POUR VEHICULES**
FAHRZEUGREIFEN
VEHICLE TYRE

(30) Priorité: 21.02.2006 FR 0601575
(43) Date de publication de la demande: 12.11.2008
(73) Titulaire: Societe de Technologie Michelin, 63000 Clermont-Ferrand (FR); Michelin Recherche et Technique S.A., 1763 Granges-Paccot (CH)
(72) Inventeur: BORDOZ, Francis, F-63100 Clermont-Ferrand (FR); GERBAL, Yannick, F-63100 Clermont-Ferrand (FR)
(74) Mandataire: Le Cam, Stéphane Georges Elie
(86) Numéro de dépôt international: PCT/EP2007/051624
(87) Numéro de publication internationale: WO 2007/096360

(56) Documents cités:
- EP-A2- 0 890 455
- WO-A-01/45966
- US-A1- 2005 217 783

## Description

L'invention concerne un pneumatique destiné à équiper un véhicule et plus particulièrement destiné à équiper un véhicule à deux roues tel qu'une motocyclette.

Bien que non limité à une telle application, l'invention sera plus particulièrement décrite en référence à un tel pneumatique de motocyclette, ou moto.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec deys, dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et lès éléments dé renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien contient l'axe de rotation du pneumatique.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée d'éléments de renforcement. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position carrière. Une deuxième structure, directement inspirée des structures couramment employées en pneumatiques pour véhicules de Touriste, a été utilisée pour améliorer la résistance à l'usure, et consiste dans l'utilisation d'au moins deux couches de sommet de travail d'éléments de renforcement sensiblement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un élément de renforcement enrobé de caoutchouc.

Le choix des architectures de sommet des pneumatiques intervient directement sur certaines propriétés des pneumatiques telles que l'usure, l'endurance, l'adhérence ou bien encore le confort en roulage ou dans les cas notamment des motocyclettes la stabilité. Toutefois d'autres paramètres des pneumatiques tels que la nature des mélanges caoutchouteux constituant la bande de roulement interviennent également sur les propriétés dudit pneumatique. Le choix et la nature des mélanges caoutchouteux, constituant la bande de roulement sont par exemple des paramètres essentiels concernant les propriétés d'usure. Le choix et la nature des mélanges caoutchouteux constituant la bande de roulement interviennent également sur les propriétés d'adhérence du pneumatique.

L'invention a pour but de fournir un pneumatique permettant d'améliorer les propriétés d'usure du pneumatique et d'améliorer des propriétés d'adhérence de la bande de roulement dudit pneumatique, notamment lors de passage de courbe dans le cas de pneumatiques pour motocyclette.

Ce but a été atteint selon l'invention par un pneumatique comportant une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, et comportant sous la bande de roulement une structure de renforcement de sommet constituée d'au moins deux couches d'éléments de renforcement dite couches de travail, lesdits éléments de renforcement des couches de travail étant de nature identique, et dans un plan circonférentiel donné, la rigidité d'extension par unité de largeur d'une première couche de travail mesurée selon la direction principale des éléments de renforcement de ladite première couche étant strictement supérieure à la rigidité d'extension par unité de largeur d'une deuxième couche de travail mesurée selon la direction principale des éléments de renforcement de ladite deuxième couche de travail, la deuxième couche de travail étant radialement plus éloignée de la structure de carcasse que ladite première couche de travail.

Selon l'invention, dés couches de travail sont des couches d'élément de renforcement présentant, au moins dans la partie centrale de la bande de roulement, des angles avec la direction circonférentielles compris entre 10 et 80°.

La zone centrale est une zone ou bande périphérique centrée sur le sommet de la bande de roulement lui même défini par le plan équatorial du pneumatique.

Au sens de l'invention, la nature des éléments de renforcement est le matériau les constituant.

La direction principale des éléments de renforcement est définie par la direction de la tangente aux éléments de renforcement au point d'intersection des éléments de renforcement et du plan circonférentiel donné.

L'unité de largeur est définie au sens de l'invention selon une direction perpendiculaire à la direction principale des éléments de renforcement.

La rigidité d'extension d'une couche d'éléments de renforcement est la propriété de la dite couche d'éléments de renforcement reliant une contrainte supportée par ladite couche et la déformation correspondante de ladite couche.

Un pneumatique ainsi réalisé selon l'invention et comportant une deuxième couche radialement plus éloignée de la structure de carcasse que la première couche, confère d'une part une rigidité radiale de la bande de roulement moins importante ; une telle propriété de la bande de roulement du pneumatique permet d'augmenter la surface de contact, ou aire de contact, de ladite bande de roulement avec le sol lors d'un roulage et ainsi d'optimiser à la fois la transmission des couples accélérateurs et freineurs tout en améliorant les propriétés en termes d'usure de la bande de roulement.

D'autre part, la réalisation d'un pneumatique conformément à l'invention confère des rigidités circonférentielles et axiales supérieures au pneumatique et donc une meilleure tenue ou de meilleures performances d'adhérence, notamment lors de passages de courbes. Ces rigidités circonférentielles et axiales supérieures selon l'invention, pour des rigidités circonférentielles et axiales globales données, sont une conséquence de l'accroissement de la rigidité de la couche de travail radialement la plus proche de la structure de carcasse, et donc participant le plus efficacement auxdites rigidités circonférentielles et axiales.

Conformément à l'invention, lorsque le pneumatique comporte plus de deux couches de travail, la rigidité d'extension par unité de largeur des couches de travail mesurée selon la direction principale des éléments de renforcement desdites couches diminue graduellement lorsque la distance radiale entre la couche de travail et la structure de carcasse augmente. En d'autres termes, par exemple dans le cas de trois couches de travail, la rigidité d'extension par unité de largeur de la troisième couche de travail mesurée selon la direction principale des éléments de renforcement de ladite troisième couche est strictement inférieure à la rigidité d'extension par unité de largeur de la deuxième couche de travail mesurée selon la direction principale des éléments de renforcement de ladite deuxième couche de travail, la deuxième couche de travail étant radialement moins éloignée de la structure de carcasse que ladite troisième couche de travail et la deuxième couche de travail étant radialement plus éloignée de la structure de carcasse qu'une première couche de travail, ladite première couche de travaille présentant une rigidité d'extension par unité de largeur mesurée selon la direction principale des éléments de renforcement de ladite première couche strictement supérieure à la rigidité d'extension par unité de largeur de ladite deuxième couche de travail mesurée selon la direction principale des éléments de renforcement de ladite deuxième couche de travail.

Selon un premier mode de réalisation de l'invention, les diamètres des éléments de renforcement de la première couche de travail sont plus grands que les diamètres des éléments de renforcement de la deuxième couche de travail.

Selon un deuxième mode de réalisation de l'invention, la densité d'éléments de renforcement de la première couche de travail est plus grande que la densité d'éléments de renforcement de la deuxième couche de travail.

Selon d'autres modes de réalisation de l'invention, la différence de rigidité entre les couches de travail peut encore être obtenue par une combinaison des deux modes de réalisation de réalisations ci-dessus présentés.

Selon l'un ou l'autre de ces modes de réalisation de l'invention, au moins dans la zone centrale de la bande de roulement et dans un plan circonférentiel donné, la valeur absolue des angles formés avec la direction circonférentielle par les éléments de renforcement des différentes couches de travail sont différents d'une couche de travail à l'autre. Les essais ont également montré que des variations d'angles des éléments de renforcement d'une couche de travail à une autre peuvent également permettre de modifier les rigidités du pneumatique.

Selon une variante de réalisation préféré de l'invention, au moins dans la zone centrale de la bande de roulement, les éléments de renforcements d'une couche de travail présentent des angles, formés avec la direction longitudinale, identiques, lesdits angles étant mesurés aux points d'intersections avec un plan circonférentiel, quel que soit ledit plan circonférentiel. En d'autres termes, pour un plan circonférentiel de coupe donné, les éléments de renforcement présentent tous le même angle formé avec la direction longitudinale aux points d'intersections avec ledit plan circonférentiel de coupe. Par ailleurs, l'angle précité peut varier selon le plan circonférentiel de coupe considéré.

Selon une réalisation préférée de l'invention, au moins dans la zone centrale de la bande de roulement, les éléments de renforcement sont équidistants les uns des autres selon tous plans circonférentiels; la distance séparant des éléments de renforcement adjacents pouvant quant à elle varier selon le plan circonférentiel de coupe considéré, ou plus précisément, la distance entre des éléments de renforcement adjacents pouvant varier selon la direction axiale.

De préférence encore, au moins dans la zone centrale de la bande de roulement, les éléments de renforcement de deux couches de travail radialement adjacentes forment entre eux des angles compris entre 20 et 160°.

Une variante de réalisation de l'invention prévoit qu'au moins une couche de travail est réalisée au moins partiellement radialement à l'intérieur de la structure de renfort de type carcasse.

Selon un premier mode de réalisation de l'invention, l'ensemble des couches de travail est réalisé radialement à l'intérieur d'au moins une structure de carcasse, c'est-à-dire à l'intérieur d'au moins une couche de carcasse. Au moins une structure de renfort de type carcasse couvre ainsi radialement la structure complète de renforcement de sommet.

Selon un second mode de réalisation préféré de l'invention, au moins une couche d'éléments de renforcement de travail de la structure de renforcement de sommet est réalisée radialement à l'extérieur de la structure de renfort de type carcasse. Selon ce second mode de réalisation de l'invention, la couche d'éléments de renforcement de travail assume une fonction de protection à l'égard de la carcasse et des autres couches de la structure de renforcement de sommet, contre des agressions mécaniques éventuelles.

Dans une variante avantageuse de l'invention, une couche d'éléments de renforcement de travail peut être réalisée en plusieurs parties mises en place en différentes positions radiales ou différents niveaux du pneumatique. Un tel pneumatique peut notamment comporter une partie de la couche d'éléments de renforcement de travail radialement à l'extérieur des éléments de renforcement de la structure de carcasse dans la partie centrale du pneumatique, c'est-à-dire sous la partie centrale de la bande de roulement. Cette partie de la couche d'éléments de renforcement de travail permet alors notamment une protection de la carcasse contre d'éventuelles agressions pouvant intervenir par la partie centrale de la bande de roulement, considérée comme la plus exposée. L'invention prévoit encore, dans le cas d'une couche d'éléments de renforcement de travail réalisée en plusieurs parties mises en place en différentes positions radiales, que la répartition de ces différentes parties ne soit pas réalisée de manière symétrique par rapport au plan équatorial, ou plan circonférentiel passant par le centre du sommet du pneumatique.

Conformément à ce type de réalisation d'une couche d'éléments de renforcement de travail fractionnée en plusieurs parties, l'invention prévoit avantageusement un recouvrement des extrémités axiales desdites parties entre-elles.

Un pneumatique selon l'invention, notamment lorsqu'au moins une partie de la structure de renforcement de sommet est réalisée radialement à l'intérieur de la structure de carcasse, est avantageusement réalisé selon une technique de fabrication du type sur noyau dur ou forme rigide.

Selon une variante de réalisation de l'invention, au moins une couche d'éléments de renforcement de travail est constituée d'au moins un fil continu de renforcement formant dans la zone centrale de ladite couche des tronçons présentant des angles, formés avec la direction longitudinale, identiques, lesdits angles étant mesurés aux points d'intersections avec un plan circonférentiel, deux tronçons adjacents étant liés par une boucle, et les tronçons formant un angle avec la direction longitudinale compris entre 10 et 80°.

Le terme « fil » désigne en toute généralité, aussi bien des mono-filaments, des fibres multifilamentaires (éventuellement tordues sur elles-mêmes) ou des assemblages comme des câbles textiles ou métalliques, des retors ou bien encore n'importe quel type d'assemblage équivalent, comme par exemple, un câble hybride, et ceci, quelle que soient la ou les matières, le traitement éventuel de ces fils, par exemple un traitement de surface ou enrobage, ou préencollage, pour favoriser l'adhésion sur le caoutchouc ou toute autre matière.

Selon cette variante avantageuse de l'invention, la couche de travail est réalisée avec au moins un fil dont aucune extrémité libre n'est présente sur les bords de ladite couche. De préférence, la réalisation de la couche est faite avec un seul fil et la couche est du type « mono-fil ». Toutefois, la réalisation industrielle de telles couches conduit à des discontinuités notamment dues à des changements de bobine. Une réalisation préférée de l'invention consiste encore à n'utiliser qu'un seul ou un faible nombre de fils pour une couche de travail et il convient de disposer les débuts et fins de fils dans la zone centrale de ladite couche.

Un pneumatique selon l'invention ainsi réalisé comporte une structure de renforcement qui ne présente aucune extrémité libre des éléments de renforcement au niveau des bords axialement extérieurs des couches de travail.

Les études réalisées ont notamment mis en évidence que la présence de couches usuelles d'éléments de renforcement présentant un angle avec la direction longitudinale conduit à des rigidités locales, circonférentielles et de cisaillement, qui diminuent à l'approche des bords desdites couche, la tension aux extrémités des éléments de renforcement étant nulle. Une tension locale nulle des éléments de renforcement se traduit par une moindre efficacité desdits éléments de renforcement dans cette zone. Or, les rigidités des bords des couches sont particulièrement importantes lorsque le pneumatique est utilisé dans les plus forts carrossages, en courbe, la partie du pneumatique correspondant à ces zones se trouvant alors en regard du sol.

La réalisation de pneumatiques pour motocyclettes conduit à des valeurs de courbures importantes pour une utilisation desdits pneumatiques en carrossage. Un pneumatique réalisé selon cette variante de l'invention et qui comporte une structure de renforcement qui ne présente aucune extrémité libre des éléments de renforcement au niveau des bords axialement extérieurs des couches de travail, permet ainsi notamment de renforcer les propriétés d'adhérence et de motricité des pneumatiques pour une utilisation en fort carrossage.

Un tel pneumatique est avantageusement réalisé selon une technique du type sur noyau dur ou toroïdal qui autorise notamment la mise en place des éléments de renforcement dans la position quasi-finale ; en effet, une étape de conformation n'étant pas requise selon ce type de procédé les éléments de renforcement ne sont plus déplacés après leur mise en place.

Dans une réalisation avantageuse de l'invention, notamment pour optimiser encore les rigidités de la structure de renforcement le long du méridien du pneumatique, et en particulier aux bords des couches de travail, les angles formés par lesdits tronçons du fil des couches de travail avec la direction longitudinale sont variables selon la direction transversale tels que lesdits angles sont supérieurs sur les bords axialement extérieurs des couches d'éléments de renforcement par rapport aux angles desdits tronçons mesurés au niveau du plan équatorial du pneumatique.

L'utilisation d'une technique du type sur noyau dur qui autorise notamment la mise en place des éléments de renforcement dans la position quasi-finale sans nécessiter d'étape de conformation présente encore des avantages. En effet, une technique du type sur noyau dur autorise notamment de manière simple des variations d'angles nettement supérieures à ce qu'il est possible d'obtenir selon des procédés comportant une étape de conformation. En outre, lesdites variations d'angle, ledit angle tendant vers 90° aux bords des couches de travail, conduit à une augmentation du pas et favorise la réalisation des boucles, du fait de la réduction de l'encombrement.

Un premier mode de réalisation des variantes de réalisation de l'invention selon lesquelles les angles formés par lesdits tronçons du fil des couches de travail avec la direction longitudinale sont variables selon la direction transversale, consiste à faire varier l'angle des tronçons d'une manière monotone depuis le plan équatorial du pneumatique jusqu'aux bords de la couche de travail.

Un second mode de réalisation de ces variantes consiste à faire évoluer l'angle par palier depuis le plan équatorial du pneumatique jusqu'aux bords de la couche de travail.

Un dernier mode de réalisation de ces variantes consiste en une évolution de l'angle telle que des valeurs données soient obtenues pour des positions axiales données.

Ces différents modes de réalisation des variantes de réalisation de l'invention selon lesquelles les angles formés par lesdits tronçons du fil des couches de travail avec la direction longitudinale sont variables selon la direction transversale permettent en d'autres termes, d'obtenir une forte rigidité circonférentielle de la structure de renforcement du sommet par la présence d'angles fermés, c'est-à-dire faibles, dans la zone du sommet du pneu, c'est-à-dire dans la zone encadrant le plan équatorial. Et au contraire la présence d'angles ouverts, c'est-à-dire d'angles tendant vers 45°, voir au-delà vers 90°, peut être obtenue sur les bords de la couche de travail ou plus exactement au niveau des épaules du pneumatique pour améliorer l'adhérence, la motricité, le confort, ou encore la température de fonctionnement du pneumatique ; en effet, de telles variations d'angles permettent de moduler les rigidités de cisaillement des couches de travail.

Selon une réalisation préférée de l'invention, les éléments de renforcement des couches de travail sont en matériau textile.

Selon un autre mode de réalisation de l'invention, les éléments de renforcement des couches de travail sont en métal.

Une réalisation préférée de l'invention prévoit que le pneumatique est notamment constitué d'une structure de renforcement de sommet qui comporte en outre au moins une couche d'éléments de renforcement circonférentiels ; selon l'invention, la couche d'éléments de renforcement circonférentiels est constituée d'au moins un élément de renforcement orienté selon un angle formé avec la direction longitudinale inférieur à 5°.

La présence d'une couche d'éléments de renforcement circonférentiels est notamment préférable pour la réalisation d'un pneumatique destiné à être utilisé à l'arrière d'une motocyclette.

Une réalisation avantageuse de l'invention prévoit que la couche d'éléments de renforcement circonférentiels est positionnée au moins partiellement sur une couche de travail. Lorsque la couche d'éléments de renforcement circonférentiels est réalisée sur deux couches de travail et placée directement sous la bande de roulement, elle peut notamment contribuer à l'amélioration de la stabilité à haute vitesse.

La couche d'éléments de renforcement circonférentiels peut ainsi être réalisée directement sous la bande de roulement pour former outre sa fonction première une couche de protection de la carcasse et des autres couches de la structure de renforcement de sommet, contre des agressions mécaniques éventuelles.

La couche d'éléments de renforcement circonférentiels peut encore être réalisée entre les couches de travail, notamment par souci économique, la quantité de matière et le temps de pose étant ainsi diminués.

Une autre réalisation avantageuse de l'invention prévoit que la couche d'éléments de renforcement circonférentiels est positionnée au moins partiellement radialement à l'intérieur de la couche de travail radialement la plus à l'intérieure. Selon cette réalisation, la couche d'éléments de renforcement circonférentiels est réalisée radialement à l'intérieur des couches de travail et peut notamment permettre d'améliorer l'adhérence et la motricité du pneumatique.

Une autre variante de l'invention prévoit qu'au moins une couche d'éléments de renforcement circonférentiels est positionnée au moins partiellement radialement à l'intérieur de la structure de renfort de type carcasse. Cette variante de réalisation peut encore reprendre les différents positionnements évoqués précédemment par rapport aux couches de travail. La carcasse peut ainsi couvrir la structure complète de renforcement de sommet. De préférence, l'invention prévoit qu'au moins une couche de renforcement de sommet est mise en place entre la carcasse et la bande de roulement pour assurer une protection de la carcasse.

Il faut noter, comme énoncé précédemment, qu'un pneumatique selon l'invention, notamment lorsqu'au moins une partie de la structure de renforcement de sommet est réalisée radialement à l'intérieur de la structure de carcasse, est avantageusement réalisé selon une technique de fabrication du type sur noyau dur ou forme rigide.

De préférence également, les éléments de renforcement de la couche d'éléments de renforcement circonférentiels sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm²_{.}

Dans une variante avantageuse de l'invention, une couche d'éléments de renforcement circonférentiels peut être réalisée en plusieurs parties mises en place en différentes positions radiales ou différents niveaux du pneumatique. Un tel pneumatique peut notamment comporter une partie de la couche d'éléments de renforcement circonférentiels radialement à l'extérieur des autres éléments de renforcement dans la partie centrale du pneumatique, c'est-à-dire sous la partie centrale de la bande de roulement. Cette partie de la couche d'éléments de renforcement circonférentiels permet alors notamment une protection de la carcasse contre d'éventuelles agressions pouvant intervenir par la partie centrale de la bande de roulement, considérée comme la plus exposée. Des parties latérales de la couche d'éléments de renforcement circonférentiels, indépendantes de la partie centrale de ladite couche d'éléments de renforcement circonférentiels, peuvent être positionnées à tous niveaux, c'est-à-dire soit radialement à l'intérieur des couches de travail soit entre-elles soit encore radialement à l'intérieur de la couche de carcasse, notamment en vue de diminuer la quantité d'éléments de renforcement et le temps de réalisation d'une telle couche d'éléments de renforcement circonférentiels. L'invention prévoit encore, dans le cas d'une couche d'éléments de renforcement circonférentiels réalisée en plusieurs parties mises en place en différentes positions radiales, que la répartition de ces différentes parties ne soit pas réalisée de manière symétrique par rapport au plan équatorial, ou plan circonférentiel passant par le centre du sommet du pneumatique. Une telle répartition non symétrique peut en outre être liée à un choix de matériaux différents des éléments de renforcement circonférentiels.

Conformément à ce type de réalisation d'une couche d'éléments de renforcement circonférentiels fractionnée en plusieurs parties, l'invention prévoit avantageusement un recouvrement des extrémités axiales desdites parties entre-elles.

Une variante de réalisation de l'invention prévoit avantageusement que les éléments de renforcement circonférentiels sont répartis selon la direction transversale avec un pas variable.

Selon un premier mode de réalisation de cette variante de l'invention, ledit pas au centre (sommet) de la bande de roulement est moins important qu'aux bords de ladite couche. Une telle réalisation selon l'invention favorise notamment une résistance aux agressions extérieures qui sont plus importantes dans la zone centrale du pneumatique.

Selon un second mode de réalisation de cette variante de l'invention, ledit pas au centre (sommet) de la bande de roulement est plus important qu'aux bords de ladite couche. Une telle réalisation selon l'invention favorise notamment la mise à plat du pneumatique à fort carrossage.

Selon une réalisation préférée de l'invention, la valeur du pas selon la direction transversale obéit à une suite sur au moins une partie de la largeur axiale de ladite couche allant jusqu'aux bords de ladite couche. Selon une telle réalisation, le pas entre les éléments de renforcement circonférentiels de ladite couche est avantageusement constant dans une zone couvrant le sommet de la bande de roulement.

Selon un premier mode de réalisation, la valeur du pas obéit à une suite arithmétique de type U(n) = Uo + nr, avec Uo compris entre 0,4 mm et 2,5 mm, et r, la raison de la suite compris entre 0,001 et 0,1.

Selon un deuxième mode de réalisation, la valeur du pas obéit à une suite géométrique de type U(n) = Uo x rn, avec Uo compris entre 0,4 mm et 2,5 mm, et r, la raison de la suite compris entre 1,001 et 1,025.

Selon d'autres modes de réalisation de l'invention, la valeur du pas peut être une combinaison de plusieurs suites en fonction de la position axiale sur ladite couche.

La variation du pas entre les éléments de renforcement circonférentiels se traduit par une variation du nombre d'éléments de renforcement circonférentiels par unité de longueur selon la direction transversale et en conséquence par une variation de la densité d'éléments de renforcement circonférentiels selon la direction transversale et donc par une variation de la rigidité circonférentielle selon la direction transversale.

Avantageusement, dans le cas d'une structure radiale, les éléments de renforcement de la structure de renfort , de type carcasse font avec la direction circonférentielle un angle compris entre 65° et 90°.

Une réalisation avantageuse de l'invention prévoit encore que la structure de renfort de type carcasse est constituée de deux demi-nappes s'étendant par exemple des épaules aux bourrelets. Selon la nature, la quantité et la disposition des éléments de renfort de sommet, l'invention prévoit effectivement la suppression de la structure de carcasse dans au moins une partie de la zone du pneumatique se trouvant sous la bande de roulement. La réalisation d'une telle structure de carcasse peut être faite selon l'enseignement du document EP-A-0 844 106. Les positions relatives précédemment énoncées des différentes couches de la structure de renforcement de sommet sont également compatibles avec une telle structure de carcasse.

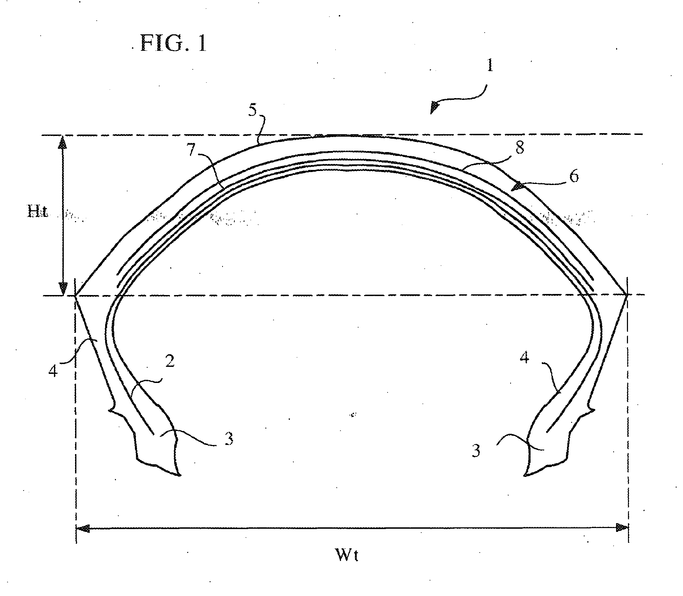

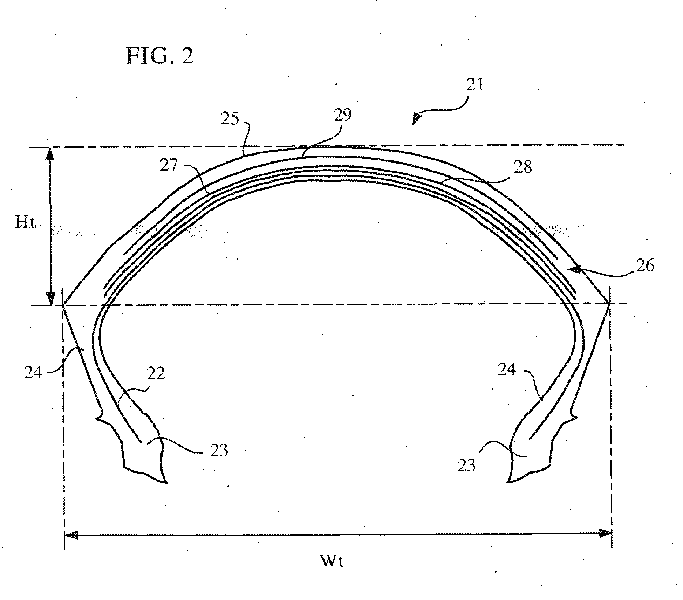

D'autres détails et caractéristiques avantageux de l'invention ressortiront ci-après de la description des exemples de réalisation de l'invention en référence aux figures 1 et 2 qui représentent :
- figure 1, une vue méridienne d'un schéma d'un pneumatique selon un premier mode de réalisation de l'invention,
- figure 2, une vue méridienne d'un schéma d'un pneumatique selon un deuxième mode de réalisation de l'invention.

Les figures 1 et 2 ne sont pas représentées à l'échelle pour en simplifier la compréhension.

La figure 1 représente un pneumatique 1 comprenant une armature de carcasse constituée d'une seule couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Le pneumatique 1 comporte encore une armature de sommet 6 constituée de deux couches 7 et 8 d'éléments de renforcement faisant des angles avec la direction circonférentielle; lesdits éléments de renforcement étant croisés d'une couche à la suivante en faisant entre eux des angles égaux à 50° dans la zone du plan équatorial, les éléments de renforcement de chacune des couches 7 et 8 formant un angle égal à 25° avec la direction circonférentiel.

Les éléments de renforcement des deux couches 7 et 8 sont en matériau textile et plus précisément en aramide.

La densité d'éléments de renforcement dans la couche 7 radialement la plus à l'intérieur est égale à 95 fils/dm (fils par décimètre). La densité d'éléments de renforcement dans la couche 8 radialement la plus à l'extérieur est égale à 45 fils/dm.

Conformément à l'invention, la densité d'éléments de renforcement de la couche 7 radialement la plus à l'intérieur est supérieure à la densité d'éléments de renforcement de la couche 8 radialement la plus à l'extérieur.

Des essais ont été réalisés avec un tel pneumatique de dimension 120/70R17 et comparé à ceux réalisés avec un pneumatique standard de même dimension constitué d'une architecture similaire, les deux couches de travail ayant des densités d'éléments de renforcement identiques et égales à 70 fils / dm et les éléments de renforcement présentant des angles identiques à ceux du pneumatique selon l'invention.

Le pneumatique standard utilisé pour la comparaison présente ainsi une rigidité globale, définie notamment par la somme des densités d'éléments de renforcement des couches de travail, identique à celle du pneumatique selon l'invention.

Deux types d'essais ont été réalisés. Tout d'abord, il s'agit d'essais qualitatifs réalisés sur circuit par un même pilote sur la même moto équipée successivement des deux types de pneumatiques à l'avant. Il s'est avéré au cours de ces essais que les pneumatiques autorisent des vitesses de passage en courbe plus importantes avec les pneumatiques selon l'invention ou bien pour une vitesse donnée une meilleure maîtrise de la moto. Ces observations peuvent s'expliquer comme énoncé précédemment par une empreinte au sol plus importante ainsi que, notamment, par une rigidité axiale plus importante.

Le deuxième type d'essais réalisé est quantitatif. Il a consisté à déterminer la distance parcourue par chacun des pneumatiques sur des machines de test simulant un roulage en ligne droite avec une charge imposée. Le pneumatique selon l'invention présente un gain en distance parcourue de l'ordre de 4% par rapport à la distance parcourue par le pneumatique standard de référence.

Sur la figure 2, est représenté un pneumatique 21 semblable à celui de la figure 1 et qui en diffère par la présence d'une couche d'éléments de renforcement circonférentiels 29 radialement à l'extérieur des couches 27, 28 de l'armature de sommet 26. La couche d'éléments de renforcement circonférentiels 29 est ainsi la partie de l'armature de sommet radialement extérieure et les deux couches de travail 27, 28 sont intercalées entre la couche de carcasse 22 et la couche d'éléments de renforcement circonférentiels 29. La couche d'éléments de renforcement circonférentiels est avantageusement constituée d'un seul fil enroulé pour former un angle avec la direction longitudinale sensiblement égal à 0°. La couche d'éléments de renforcement circonférentiels peut encore être réalisée par l'enroulement simultané de plusieurs fils nus ou sous forme de bandelettes lorsqu'ils sont noyés dans du caoutchouc.

Comme dans le cas de la figure 1, les couches de travail 27, 28 sont constituées de renforts textiles et sont réalisés selon l'invention, la densité d'éléments de renforcement de la couche 27 radialement la plus à l'intérieur étant supérieure à la densité d'éléments de renforcement de la couche 28.

L'invention ne doit bien entendu pas être interprétée de manière limitative au vu de ces deux exemples de réalisation. Les variations de rigidité d'extension par unité de largeur d'une couche de travail mesurée selon la direction principale des éléments de renforcement de ladite couche peuvent également être obtenues par exemple par des différences de diamètre des éléments de renforcement ou bien encore par une combinaison de différents moyens.

L'invention s'étend encore à des pneumatiques pouvant comporter des armatures de sommet plus complexes comportant par exemple trois, ou plus, couches de travail d'éléments de renforcement faisant un angle avec la direction circonférentielle.

L'invention s'applique également aux différents cas d'armature de sommet énoncés précédemment et notamment décrits dans les demandes de brevet WO 2004/018236, WO 2004/018237, WO 2005/070704, WO 2005/070706, présentant notamment les différentes positions radiales des couches constituant l'armature de sommet les unes par rapport aux autres, ainsi que leur position radiale par rapport à la structure de carcasse, ainsi encore que la constitution d'une couche formée par un fil constituant des tronçons liés pars des boucles ou encore la variation des angles desdits tronçons selon la direction axiale.

## Revendications

1. Pneumatique (1, 21) comportant une structure de renfort de type carcasse (2, 22), formée d'éléments de renforcement, ancrée de chaque côté du pneumatique à un bourrelet (3, 23) dont la base est destinée à être montée sur un siège de jante, chaque bourrelet se prolongeant radialement vers l'extérieur par un flanc (4, 24) , les flancs rejoignant radialement vers l'extérieur une bande de roulement (5, 25), et comportant sous la bande de roulement une structure de renforcement de sommet (6, 26) constituée d'au moins deux couches d'éléments de renforcement dites couches de travail (7, 8, 27, 28) , lesdits éléments de renforcement des couches de travail étant constitues d'un matériau identique et présentant, au moins dans la partie centrale de la bande de roulement, des angles avec la direction circonférentielle comprise entre 10 et 80°, **caractérisé en ce que** dans un plan circonférentiel donné, la rigidité d'extension par unité de largeur d'une première couche de travail (7, 27) mesurée selon la direction principale des éléments de renforcement de ladite première couche est strictement supérieure à la rigidité d'extension par unité de largeur d'une deuxième couche de travail (8, 28) mesurée selon la direction principale des éléments de renforcement de ladite deuxième couche de travail et **en ce que** la deuxième couche de travail est radialement plus éloignée de la structure de carcasse que ladite première couche de travail.

2. Pneumatique (1, 21) selon la revendication 1, **caractérisé en ce que** les diamètres des éléments de renforcement de la première couche de travail (7, 27) sont plus grands que les diamètres des éléments de renforcement de la deuxième couche de travail (8, 28).

3. Pneumatique (1, 21) selon la revendication 1, ou 2, **caractérisé en ce que** la densité d'éléments de renforcement de la première couche de travail (7, 27) est plus grandie que la densité d'éléments de renforcement de la deuxième couche de travail (8, 28).

4. Pneumatique (1, 21) selon l'une des revendications 1 à 3, **caractérisé en ce qu'**au moins dans la zone centrale de la bande de roulement et dans un plan circonférentiel donné, les angles formés avec la direction circonférentielle par les différents éléments de renforcement des couches de travail (7, 8, 27, 28) sont différents d'une couche de travail à l'autre.

5. Pneumatique (1, 21) selon l'une des revendications précédentes, **caractérisé en ce qu'au** moins dans la zone centrale de la bande de roulement, les éléments de renforcements d'une couche de travail (7, 8, 27, 28) présentent des angles, formés avec la direction longitudinale, identiques, lesdits angles étant mesurés aux points d'intersections avec un plan circonférentiel, quel que soit ledit plan circonférentiel.

6. Pneumatique (1, 21) selon l'une des revendications précédentes, **caractérisé en ce qu'**au moins dans la zone centrale de la bande de roulement, les éléments de renforcement de deux couches de travail (7, 8, 27, 28) radicalement adjacentes forment entre eux des angles compris entre 20 et 160°.

7. Pneumatique (1, 21) selon l'une des revendications précédentes, **caractérisé en ce que,** dans une même couche de travail (7, 8, 27, 28), les éléments de renforcement sont équidistants les uns des autres selon tous plans circonférentiels.

8. Pneumatique (1, 21) selon l'une des revendications précédentes, **caractérisé en ce qu'**au moins une couche d'éléments de renforcement de travail (7, 8, 27, 28) est constituée d'au moins un fil continu de renforcement formant dans la zone centrale de ladite couche des tronçons présentant des angles, formés avec la direction longitudinale, identiques, lesdits angles étant mesurés aux, points d'intersections avec un plan circonférentiel, **en ce que** deux tronçons adjacents sont liés par une boucle, et **en ce que** les tronçons forment un angle avec la direction longitudinale compris entre 10 et 80°.

9. Pneumatique (1, 21) selon la revendication 8, **caractérisé en ce que** les angles formés par lesdits tronçons avec la direction longitudinale sont variables selon la direction transversale et **en ce que** lesdits angles sont supérieurs sur les bords axialement extérieurs des couches d'éléments de renforcement (7, 8, 27, 28) par rapport aux angles desdits tronçons mesurés au niveau du plan équatorial du pneumatique.

10. Pneumatique (1, 21) selon l'une des revendications précédentes, **caractérisé en ce que** les éléments de renforcement de la structure de renfort de type carcasse (2, 22) font avec la direction circonférentielle un angle compris entre 65° et 90°.

11. Pneumatique (1, 21) selon l'une des revendications précédentes, **caractérisé en ce que** la structure de renfort de type carcasse (2, 22) est réalisée en deux demi-nappes s'étendant des épaules aux bourrelets.

12. Pneumatique (1, 21) selon l'une des revendications précédentes, **caractérisé en ce que** les éléments de renforcement des couches de travail (7, 8, 27, 28) sont en matériau textile.

13. Pneumatique (1, 21) selon l'une des revendications 1 à 11, **caractérisé en ce que** les élément de renforcement des couches de travail (7, 8, 27, 2 8) sont en métal.

14. Pneumatique (1, 21) selon l'une des revendications précédentes, **caractérisé en ce que** la structure de renforcement de sommet (6, 26) comporte une couche d'éléments de renforcement circonférentiels (9, 29).

15. Pneumatique (1, 21) selon la revendication 14, **caractérisé en ce que** les éléments de renforcement de la couche d'éléments de renforcement circonférentiels (9, 29) sont métalliques et/ou textiles et/ou en verre.

16. Utilisation d'un pneumatique (1, 21) tel que décrit selon l'une des revendications 1 à 15 pour un véhicule motorisé à deux roues tel qu'une motocyclette.

## Claims

1. Tyre (1, 21) comprising a carcass-type reinforcement structure (2, 22), formed from reinforcing elements, anchored on each side of the tyre to a bead (3, 23) the base of which is intended to be mounted on a rim seat, each bead being extended radially outwards by a sidewall (4, 24), the sidewalls joining radially outwards a tread (5, 25), and having beneath the tread a crown reinforcement structure (6, 26) consisting of at least two layers of reinforcing elements called working layers (7, 8, 27, 28), said reinforcing elements of the working layers being of identical nature and having, at least in the central zone of the tread, angles of between 10° and 80° with the circumferential direction, **characterized in that**, in a given circumferential plane, the extensional stiffness per unit width of a first working layer (7, 27) measured along the principal direction of the reinforcing elements of said first layer is strictly higher than the extensional stiffness per unit width of a second working layer (8, 28) measured along the principal direction of the reinforcing elements of said second working layer and **in that** the second working layer is radially further away from the carcass structure than said first working layer.

2. Tyre (1, 21) according to Claim 1, **characterized in that** the diameters of the reinforcing elements of the first working layer (7, 27) are larger than the diameters of the reinforcing elements of the second working layer (8, 28).

3. Tyre (1, 21) according to Claim 1 or 2, **characterized in that** the density of reinforcing elements of the first working layer (7, 27) is higher than the density of reinforcing elements of the second working layer (8, 28).

4. Tyre (1, 21) according to one of Claims 1 to 3, **characterized in that**, at least in the central zone of the tread and in a given circumferential plane, the angles made with the circumferential direction by the various reinforcing elements of the working layers (7, 8, 27, 28) are different from one working layer to another.

5. Tyre (1, 21) according to one of the preceding claims, **characterized in that**, at least in the central zone of the tread, the reinforcing elements of one working layer (7, 8, 27, 28) have angles, made with the longitudinal direction, which are identical, said angles being measured at the points of intersection with a circumferential plane, whatever said circumferential plane.

6. Tyre (1, 21) according to one of the preceding claims, **characterized in that**, at least in the central zone of the tread, the reinforcing elements of two radially adjacent working layers (7, 8, 27, 28) make angles of between 20° and 160° between them.

7. Tyre (1, 21) according to one of the preceding claims, **characterized in that**, in one and the same working layer (7, 8, 27, 28), the reinforcing elements are equidistant from one another in all circumferential planes.

8. Tyre (1, 21) according to one of the preceding claims, **characterized in that** at least one working layer of reinforcing elements (7, 8, 27, 28) consists of at least one continuous reinforcing thread forming, in the central zone of said layer, portions having angles, made with the longitudinal direction, which are identical, said angles being measured at the points of intersection with a circumferential plane, **in that** two adjacent portions are linked by a loop and **in that** the portions make an angle of between 10° and 80° with the longitudinal direction.

9. Tyre (1, 21) according to Claim 8, **characterized in that** the angles made by said portions with the longitudinal direction can vary depending on the transverse direction and **in that** said angles are larger on the axially outer edges of the layers of reinforcing elements (7, 8, 27, 28) than the angles of said portions measured in the equatorial plane of the tyre.

10. Tyre (1, 21) according to one of the preceding claims, **characterized in that** the reinforcing elements of the carcass-type reinforcement structure (2, 22) make an angle of between 65° and 90° with the circumferential direction.

11. Tyre (1, 21) according to one of the preceding claims, **characterized in that** the carcass-type reinforcement structure (2, 22) is produced from two half-plies extending from the shoulders to the beads.

12. Tyre (1, 21) according to one of the preceding claims, **characterized in that** the reinforcing elements of the working layers (7, 8, 27, 28) are made of textile material.

13. Tyre (1, 21) according to one of Claims 1 to 11, **characterized in that** the reinforcing elements of the working layers (7, 8, 27, 28) are made of metal.

14. Tyre (1, 21) according to one of the preceding claims, **characterized in that** the crown reinforcement structure (6, 26) comprises a layer of circumferential reinforcing elements (9, 29).

15. Tyre (1, 21) according to Claim 14, **characterized in that** the reinforcing elements of the layer of circumferential reinforcing elements (9, 29) are metallic and/or textile and/or glass elements.

16. Use of a tyre (1, 21) as described according to one of Claims 1 to 15 for a two-wheel motorized vehicle, such as a motorcycle.

## Patentansprüche

1. Luftreifen (1, 21), der eine von Verstärkungselementen gebildete Stützstruktur vom Typ Karkasse (2, 22) aufweist, die auf jeder Seite des Luftreifens an einem Wulst (3, 23) verankert ist, dessen Basis dazu bestimmt ist, auf einen Felgensitz montiert zu werden, wobei jeder Wulst sich radial nach außen durch eine Flanke (4, 24) verlängert, wobei die Flanken radial nach außen an eine Lauffläche (5, 25) anschließen, und unter der Lauffläche eine Scheitelverstärkungsstruktur (6, 26) aufweist, die aus mindestens zwei Schichten von Verstärkungselementen besteht, Arbeitsschichten (7, 8, 27, 28) genannt, wobei die Verstärkungselemente der Arbeitsschichten aus dem gleichen Material bestehen und zumindest im zentralen Bereich der Lauffläche Winkel zwischen 10 und 80° mit der Umfangsrichtung aufweisen, **dadurch gekennzeichnet, dass** in einer gegebenen Umfangsebene die Dehnungssteifheit pro Breiteneinheit einer ersten Arbeitsschicht (7, 27) gemessen in der Hauptrichtung der Verstärkungselemente der ersten Schicht strikt größer als die Dehnungssteifheit pro Breiteneinheit einer zweiten Arbeitsschicht (8, 28) gemessen in der Hauptrichtung der Verstärkungselemente der zweiten Arbeitsschicht ist, und dass die zweite Arbeitsschicht radial weiter von der Karkassenstruktur entfernt ist als die erste Arbeitsschicht.

2. Luftreifen (1, 21) nach Anspruch 1, **dadurch gekennzeichnet, dass** die Durchmesser der Verstärkungselemente der ersten Arbeitsschicht (7, 27) größer sind als die Durchmesser der Verstärkungselemente der zweiten Arbeitsschicht (8, 28).

3. Luftreifen (1, 21) nach Anspruch 1 oder 2, **dadurch gekennzeichnet, dass** die Dichte von Verstärkungselementen der ersten Arbeitsschicht (7, 27) größer ist als die Dichte von Verstärkungselementen der zweiten Arbeitsschicht (8, 28).

4. Luftreifen (1, 21) nach einem der Ansprüche 1 bis 3, **dadurch gekennzeichnet, dass** zumindest in der zentralen Zone der Lauffläche und in einer gegebenen Umfangsebene die von den verschiedenen Verstärkungselementen der Arbeitsschichten (7, 8, 27, 28) mit der Umfangsrichtung gebildeten Winkel sich von einer Arbeitsschicht zur anderen unterscheiden.

5. Luftreifen (1, 21) nach einem der vorhergehenden Ansprüche, **dadurch gekennzeichnet, dass** zumindest in der zentralen Zone der Lauffläche die Verstärkungselemente einer Arbeitsschicht (7, 8, 27, 28) gleiche mit der Längsrichtung gebildete Winkel aufweisen, wobei die Winkel an den Schnittpunkten mit einer Umfangsebene unabhängig von der Umfangsebene gemessen werden.

6. Luftreifen (1, 21) nach einem der vorhergehenden Ansprüche, **dadurch gekennzeichnet, dass** zumindest in der zentralen Zone der Lauffläche die Verstärkungselemente von zwei radial benachbarten Arbeitsschichten (7, 8, 27, 28) zwischen sich Winkel zwischen 20 und 160° bilden.

7. Luftreifen (1, 21) nach einem der vorhergehenden Ansprüche, **dadurch gekennzeichnet, dass** in der gleichen Arbeitsschicht (7, 8, 27, 28) die Verstärkungselemente in allen Umfangsebenen den gleichen Abstand zueinander haben.

8. Luftreifen (1, 21) nach einem der vorhergehenden Ansprüche, **dadurch gekennzeichnet, dass** mindestens eine Schicht von Arbeitsverstärkungselementen (7, 8, 27, 28) aus mindestens einem durchgehenden Verstärkungsdraht besteht, der in der zentralen Zone der Schicht Abschnitte formt, die gleiche mit der Längsrichtung gebildete Winkel haben, wobei die Winkel an den Schnittpunkten mit einer Umfangsebene gemessen werden, dass zwei benachbarte Abschnitte durch eine Schleife verbunden sind, und dass die Abschnitte einen Winkel mit der Längsrichtung bilden, der zwischen 10 und 80° liegt.

9. Luftreifen (1, 21) nach Anspruch 8, **dadurch gekennzeichnet, dass** die von den Abschnitten mit der Längsrichtung gebildeten Winkel in der Querrichtung variabel sind, und dass die Winkel an den axial äußeren Rändern der Schichten von Verstärkungselementen (7, 8, 27, 28) bezüglich der Winkel der Abschnitte größer sind, die in Höhe der Äquatorialebene des Luftreifens gemessen werden.

10. Luftreifen (1, 21) nach einem der vorhergehenden Ansprüche, **dadurch gekennzeichnet, dass** die Verstärkungselemente der Stützstruktur vom Typ Karkasse (2, 22) mit der Umfangsrichtung einen Winkel zwischen 65° und 90° bilden.

11. Luftreifen (1, 21) nach einem der vorhergehenden Ansprüche, **dadurch gekennzeichnet, dass** die Stützstruktur vom Typ Karkasse (2, 22) aus zwei Halblagen hergestellt wird, die sich von den Schultern zu den Wülsten erstrecken.

12. Luftreifen (1, 21) nach einem der vorhergehenden Ansprüche, **dadurch gekennzeichnet, dass** die Verstärkungselemente der Arbeitsschichten (7, 8, 27, 28) aus Textilwerkstoff sind.

13. Luftreifen (1, 21) nach einem der Ansprüche 1 bis 11, **dadurch gekennzeichnet, dass** die Verstärkungselemente der Arbeitsschichten (7, 8, 27, 28) aus Metall sind.

14. Luftreifen (1, 21) nach einem der vorhergehenden Ansprüche, **dadurch gekennzeichnet, dass** die Scheitelverstärkungsstruktur (6, 26) eine Schicht von Umfangsverstärkungselementen (9, 29) aufweist.

15. Luftreifen (1, 21) nach Anspruch 14, **dadurch gekennzeichnet, dass** die Verstärkungselemente der Schicht von Umfangsverstärkungselementen (9, 29) aus Metall und/oder Textilwerkstoff und/oder Glas sind.

16. Verwendung eines Luftreifens (1, 21), wie er gemäß einem der Ansprüche 1 bis 15 beschrieben ist, für ein zweirädriges Motorfahrzeug wie ein Motorrad.
